# EUROPÄISCHE PATENTANMELDUNG

(11) **EP 3 109 605 A1**
(43) Veröffentlichungstag der Anmeldung: **28.12.2016**
(21) Anmeldenummer: 16172212.9
(22) Anmeldetag: 31.05.2016
(51) Int. Cl.: G01G 21/28, G01G 23/18, G01G 19/56

(54) **MULTIFUNKTIONSVORRICHTUNG ZUR VERWENDUNG IN DER KÜCHE**

(30) Priorität: 23.06.2015 DE 102015110096
(71) Anmelder: Franke Technology and Trademark Ltd, 6052 Hergiswil (CH)
(72) Erfinder:
(74) Vertreter: Lemcke, Brommer & Partner Patentanwälte Partnerschaft mbB

(57) **Zusammenfassung**

Vorgeschlagen wird eine Multifunktionsvorrichtung (100) zur Verwendung in der Küche, umfassend: ein unterseitiges Gehäuse (10); eine oberseitige Abdeckplatte (1), die zumindest teilweise transluzid ausgebildet ist; wenigstens eine innerhalb des Gehäuses (10) im Bereich der Abdeckplatte (1) angeordnete Lichtquelle; wenigstens einen zwischen Gehäuse (10) und Abdeckplatte (1) oder an einer Unterseite des Gehäuses (10) angeordneten Gewichtssensor; wenigstens ein Bedienelement (4, 4') zum selektiven Aktivieren eines Leuchtmodus mit eingeschalteter Lichtquelle und/oder eines Wägemodus mit eingeschaltetem Gewichtssensor. Weiterhin vorgeschlagen wird ein Küchenarbeitsplatz, umfassend eine Küchenspüle mit wenigstens einem Spülenbecken, das einen umlaufenden Beckenrand aufweist, und eine Multifunktionsvorrichtung (100), wie vorstehend definiert, wobei der Beckenrand und das Gehäuse (10) der Multifunktionsvorrichtung (100) zumindest bereichsweise komplementär und mit aufeinander abgestimmten Abmessungen ausgebildet sind, so dass die Multifunktionsvorrichtung (100) im Randbereich in das Spülenbecken einhängbar ist, wobei vorzugsweise eine Oberseite (1a) der Abdeckplatte und ein Spülenrand oder eine Spülenfläche in einer gemeinsamen Ebene liegen oder eine solche definieren.

## Beschreibung

Die Erfindung betrifft eine Multifunktionsvorrichtung zur Verwendung in der Küche.

Außerdem betrifft sie einen Küchenarbeitsplatz, umfassend eine Küchenspüle mit wenigstens einem Spülenbecken, das einen umlaufenden Beckenrand aufweist, und eine erfindungsgemäße Multifunktionsvorrichtung.

Küchen und die darin verwendeten Funktionsgegenstände (Vorrichtungen) müssen heute neben Anforderungen an die Funktion selbst immer auch bestimmten Designanforderungen genügen. Besonders vorteilhaft ist es, wenn außerdem verschiedene Funktionen in ein und demselben Gegenstand vereint sind, weil dann einerseits über eine Verringerung der Anzahl von benötigten Gegenständen ein gewisser Ordnungseffekt und andererseits auch ein gestalterischer Mehrwert erzielt werden kann.

In jeder Küche kommt heutzutage eine Waage oder dgl. zum Einsatz, um Lebensmittel richtig portionieren zu können. Außerdem findet sich in jeder Küche ein Schneidebrett oder dgl., um Lebensmittel zu zerteilen. Insbesondere bei letzterem Vorgang spielt eine geeignete Arbeitsplatzbeleuchtung eine wichtige Rolle, die in der Küche oftmals gar nicht oder nicht überall in gleichem Maße vorhanden ist - beispielsweise wenn sich der Koch oder die Köchin beim Schneiden über das Schneidebrett beugt.

Der Erfindung liegt die Aufgabe zugrunde, die Anzahl in der Küche benötigter einzelner Funktionsgegenstände zu reduzieren und dabei noch einen ästhetischen Mehrwert zu erzielen.

Die Aufgabe wird erfindungsgemäß gelöst durch eine Multifunktionsvorrichtung mit den Merkmalen des Anspruchs 1 und einen Küchenarbeitsplatz mit den Merkmalen des Anspruch 18. Vorteilhafte Weiterbildungen der Erfindung sind Gegenstand von Unteransprüchen.

Erfindungsgemäß umfasst eine Multifunktionsvorrichtung zur Verwendung in der Küche: ein unterseitiges Gehäuse; eine oberseitige Abdeckplatte, die zumindest teilweise transluzid ausgebildet ist; wenigstens eine innerhalb des Gehäuses im Bereich der Abdeckplatte angeordnete Lichtquelle; wenigstens einen zwischen Gehäuse und Abdeckplatte oder an einer Unterseite des Gehäuses angeordneten Gewichtssensor; und wenigstens ein Bedienelement zum selektiven Aktivieren eines Leuchtmodus mit eingeschalteter Lichtquelle und/oder eines Wägemodus mit eingeschaltetem Gewichtssensor.

Vorliegend umfasst der Begriff "an einer Unterseite des Gehäuses angeordneter Gewichtssensor" sowohl Gewichtssensoren, die vollständig unterhalb bzw. außerhalb des Gehäuses der Multifunktionsvorrichtung angeordnet sind, als auch solche Gewichtssensoren, die in Durchbrüche an der Unterseite des Gehäuses eingesetzt sind und sich somit zumindest auch teilweise innerhalb des Gehäuses befinden.

Die Erfindung integriert also zunächst eine (Haushalts-)Waage und eine Beleuchtungsvorrichtung und reduziert so die Anzahl in der Küche benötigter einzelner Funktionsgegenstände, um nebenbei noch einen ästhetischen Mehrwert zu erzielen.

Dabei kann in Weiterbildung vorgesehen sein, dass im Leuchtmodus verschiedene Lichtstärken und/oder Lichtfarben schaltbar oder auswählbar sind, vorzugsweise gemäß einem oder mehreren der folgenden Modi: Beleuchtungsmodus, Hintergrundlichtmodus, Umgebungslichtmodus, Stimmungslichtmodus. Dadurch lassen sich optimale Beleuchtungsergebnisse erzielen und der ästhetische Mehrwert noch erhöhen. Auch ein automatisierter Wechsel zwischen zumindest einigen der genannten Modi ist möglich.

Um auch bei Schneidevorgängen immer eine optimale Beleuchtungssituation zu gewährleisten, kann weiter vorgesehen sein, dass die Abdeckplatte selbst als Schneidebrett ausgebildet und entsprechend schnittfest ausgestaltet ist. Dies reduziert außerdem nochmals die Anzahl in der Küche benötigter einzelner Funktionsgegenstände.

Aus Gründen der Hygiene, der Widerstandsfähigkeit und die Ästhetik kann die Abdeckplatte in einem Glas- oder Glaskeramikmaterial ausgebildet sein, welches vorzugsweise rückseitig zumindest bereichsweise bedruckt und/oder beschichtet ist, um gezielte optisch-visuelle Wirkungen zu erzielen, beispielsweise durch Aufbringen eines Herstellerlogos oder dgl. Außerdem können bestimmte aktive Bereiche (Bedienbereiche) der Multifunktionsvorrichtung entsprechend markiert werden, beispielsweise das wenigstens eine Bedienelement.

Weiterhin kann vorgesehen sein, dass die Multifunktionsvorrichtung bei entsprechender Ausgestaltung und Weiterbildung eine Arretierung für die Abdeckplatte bezüglich des Gehäuses aufweist, um den wenigstens einen Gewichtssensor bei Verwendung der Multifunktionsvorrichtung als Schneidebrett zu schonen.

In Weiterbildung kann die Multifunktionsvorrichtung außerdem eine wieder aufladbare Energiequelle, insbesondere in Form eines Akkumulators, umfassen, die vorzugsweise mittels eines Micro-USB-Anschlusses aufladbar und höchst vorzugsweise, insbesondere aus Gründen der Massenbalance, zentral bezüglich der Multifunktionsvorrichtung angeordnet ist. Die Energiequelle versorgt alle elektrischen Verbraucher der Multifunktionsvorrichtung mit elektrischer Energie, insbesondere den Gewichtssensor und die Lichtquelle. Damit ist die Multifunktionsvorrichtung örtlich im Wesentlichen autark einsetzbar.

Angesicht ihrer angedachten Verwendung in der Küche ist die Multifunktionsvorrichtung vorzugsweise insgesamt wasserfest, insbesondere spritzwassergeschützt, und gegenüber äußerer Schmutzeinwirkung unempfindlich ausgebildet.

Das Gehäuse der Multifunktionsvorrichtung kann ein umlaufendes Randprofil aufweisen, welches zumindest teilweise komplementär zu einem Beckenrandprofil einer vorzugsweise handelsüblichen Küchenspüle ausgebildet ist und höchst vorzugsweise eine umlaufende, konkave Schulter aufweist, die insbesondere abgerundet ausgebildet ist. Auf diese Weise lässt sich die Multifunktionsvorrichtung sicher im Bereich des Beckenrandes der Spüle ablegen, ohne bei Wiegen oder Schneiden zu verrutschen.

Das Gehäuse der Multifunktionsvorrichtung kann, je nach Anforderung, in Metall oder Kunststoff ausgebildet sein.

Das Gehäuse der Multifunktionsvorrichtung ist vorzugsweise wannenartig und zur Abdeckplatte hin offen ausgebildet oder mittels der Abdeckplatte nach außen im Wesentlichen abgeschlossen. Es nimmt die sämtlichen Funktionselemente der Multifunktionsvorrichtung schützend auf.

Die Abdeckplatte der Multifunktionsvorrichtung kann bei einer entsprechenden Ausgestaltung der Multifunktionsvorrichtung senkrecht zur Plattenebene relativ zum Gehäuse beweglich gelagert sein, vorzugsweise mittels des wenigstens einen Gewichtssensors, um die Wägefunktion zu gewährleisten. Entsprechend können das Gehäuse und die Abdeckplatte über den wenigstens einen Gewichtssensor mechanisch gekoppelt sein.

Alternativ kann jedoch auch vorgesehen sein, dass bei einer entsprechenden Ausgestaltung der Multifunktionsvorrichtung die Abdeckplatte im Wesentlichen fest mit dem Gehäuse verbunden ist. Der wenigstens eine Gewichtssensor kann dabei, wie bereits erwähnt, an der Unterseite des Gehäuses vorgesehen sein. Dies stellt eine besonders kostengünstig realisierbare und robuste Variante der Multifunktionsvorrichtung dar.

Vorzugsweise umfasst die Multifunktionsvorrichtung mehrere Gewichtssensoren, beispielsweise einen an jeder Ecke, d.h. vier bei bevorzugt rechteckiger Ausgestaltung, und zwar sowohl bei der Variante mit bezüglich des Gehäuses beweglicher Abdeckplatte als auch bei der Variante mit bezüglich des Gehäuses feststehender Abdeckplatte.

Unterhalb der Abdeckplatte kann in Weiterbildung der Multifunktionsvorrichtung wenigstens eine der folgenden Komponenten zumindest teilweise in dem Gehäuse angeordnet sein: der Gewichtssensor, vorzugsweise ein piezoelektrischer Sensor, höchst vorzugsweise eine Mehrzahl derartiger Sensoren, sofern diese/r nicht gänzlich unterhalb (außerhalb) des Gehäuses angeordnet ist/sind; die Lichtquelle; wenigstens ein An-/Ausschalter (Bedienelement), vorzugsweise jeweils wenigstens einer für den Leuchtmodus und für den Wägemodus, vorzugsweise in Form eines kapazitiven Schalters; die Energiequelle; wenigstens ein Steckeranschluss, vorzugsweise zum Laden der Energiequelle, vorzugsweise in Form eines Micro-USB-Anschlusses; wenigstens ein Schaltelement, vorzugsweise zum Umschalten oder Auswählen einer Wägeeinheit; und eine Anzeigeeinrichtung zum Anzeigen eines Wägeergebnisses.

Um einen Feuchtigkeits- und Verschmutzungsschutz zu gewährleisten, kann in Weiterbildung der Multifunktionsvorrichtung vorgesehen sein, dass eine vorzugsweise durchgängig umlaufende Dichtung zwischen Gehäuse und Abdeckplatte vorgesehen ist. Diese Dichtung oder Membran kann flexibel ausgebildet sein, um ggf. relative Bewegungen zwischen Abdeckplatte und Gehäuse aufzunehmen.

Die Anzeigeeinrichtung und/oder die Lichtquelle können unterseitig an der Abdeckplatte festgelegt oder dicht benachbart zu dieser angeordnet sein, um eine gute Sichtbarkeit (Ablesebarkeit) von außen durch die Abdeckplatte zu gewährleisten. Die Abdeckplatte ist also zumindest dort transluzid oder sogar klar durchsichtig ausgebildet, wo die Anzeigeeinrichtung und/oder die Lichtquelle angeordnet ist bzw. sind.

In Weiterbildung der Multifunktionsvorrichtung kann die Lichtquelle neben dem eigentlichen Lichterzeuger, z.B. einer einzigen Leuchtdiode, eine Lichtleiteinrichtung aufweisen, um einen flächigen Leuchteffekt zu erzielen, oder die Lichtquelle kann wenigstens einen flächigen Lichterzeuger, wie ein OLED-Element oder dergleichen, umfassen. Vorzugsweise sind mehrere solcher flächigen Lichterzeuger zusammengeschaltet, um den angesprochenen flächigen Leuchteffekt zu erzielen.

Die Anzeigeeinrichtung kann bei nicht aktivem Wägemodus von außerhalb der Abdeckplatte unsichtbar und nur bei aktivem Wägemodus von außerhalb der Abdeckplatte sichtbar ausgebildet sein, wobei vorzugsweise - jedoch ohne Beschränkung - die Anzeigeeinrichtung als 7-Segmente-Anzeige ausgebildet ist.

Der Steckeranschluss kann - ohne Beschränkung - als Standard- oder Micro-USB-Anschluss ausgebildet sein, welcher vorzugsweise an einer längeren Gehäuseseite der Vorrichtung angeordnet ist, und welcher höchst vorzugsweise bei Verwendung der Multifunktionsvorrichtung mittels einer Abdeckung (Stopfen) gegen Schmutz und/oder Spritzwasser geschützt ist.

Ein anderer Aspekt der Erfindung betrifft einen Küchenarbeitsplatz, umfassend eine Küchenspüle mit wenigstens einem Spülenbecken, das einen umlaufenden Beckenrand aufweist, und eine Multifunktionsvorrichtung, wie vorstehend beschrieben, wobei der Beckenrand und das Gehäuse der Multifunktionsvorrichtung zumindest bereichsweise komplementär und mit aufeinander abgestimmten Abmessungen ausgebildet sind, so dass die Multifunktionsvorrichtung in das Spülenbecken einhängbar ist, wobei vorzugsweise eine Oberseite der Abdeckplatte und eine Spülenfläche in einer gemeinsamen Ebene liegen bzw. eine solche definieren. Die so ausgerüstete Spüle verfügt anschließend - je nach Ausgestaltung der Multifunktionsvorrichtung - über eine Wiege-, Schneide- und Beleuchtungsfunktion. Dabei kann die Wägefunktion insbesondere und bevorzugt dann zum Einsatz kommen, wenn die Multifunktionsvorrichtung gemäß der Variante mit relativ zueinander beweglicher Abdeckplatte und Gehäuse ausgebildet ist.

Weitere Eigenschaften und Vorteile ergeben sich aus der nachfolgenden Beschreibung von Ausführungsbeispielen anhand der Zeichnung.
Fig. 1 zeigt eine erfindungsgemäße Multifunktionsvorrichtung in perspektivischer Gesamtansicht;
Fig. 2 zeigt die Multifunktionsvorrichtung aus Fig. 1 bei bestimmungsgemäßer Verwendung an einer Küchenspüle;
Fig. 3 zeigt eine Draufsicht der Multifunktionsvorrichtung aus Fig. 1;
Fig. 4 zeigt eine rückseitige Ansicht der Multifunktionsvorrichtung aus Fig. 1;
Fig. 5 zeigt einen inneren Aufbau einer Multifunktionsvorrichtung analog Fig. 1;
Fig. 6 zeigt das Gehäuse und die Abdeckplatte einer alternativen Multifunktionsvorrichtung;
Fig. 7 zeigt einen Längsschnitt durch die Multifunktionsvorrichtung gemäß Fig. 6;
Fig. 8 zeigt eine Seitenansicht der Multifunktionsvorrichtung gemäß Fig. 6;
Fig. 9 zeigt eine erste Ausgestaltung der Lichtquelle bei einer Multifunktionsvorrichtung analog Fig. 1; und
Fig. 10 zeigt eine zweite Ausgestaltung der Lichtquelle bei einer Multifunktionsvorrichtung analog Fig. 1.

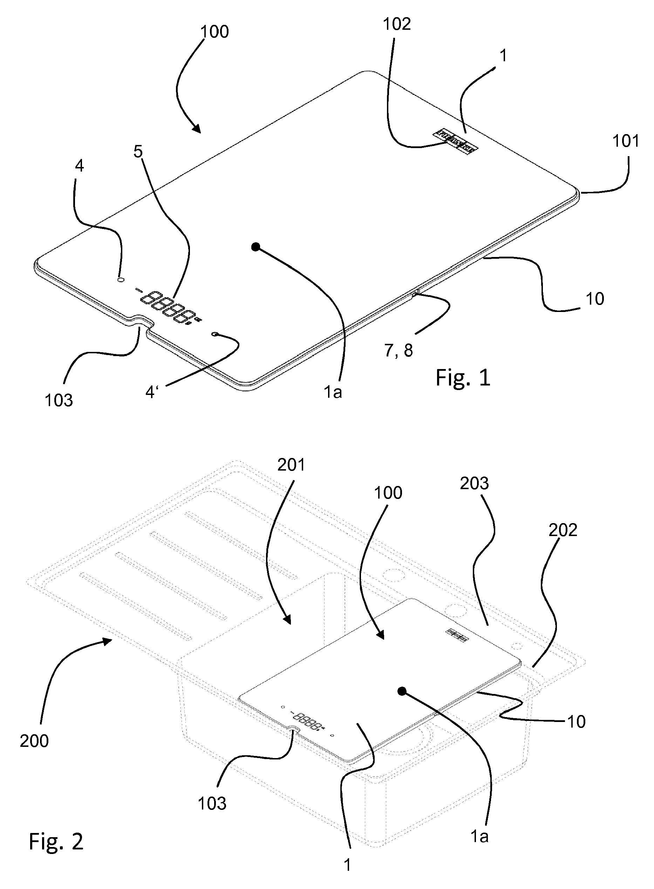

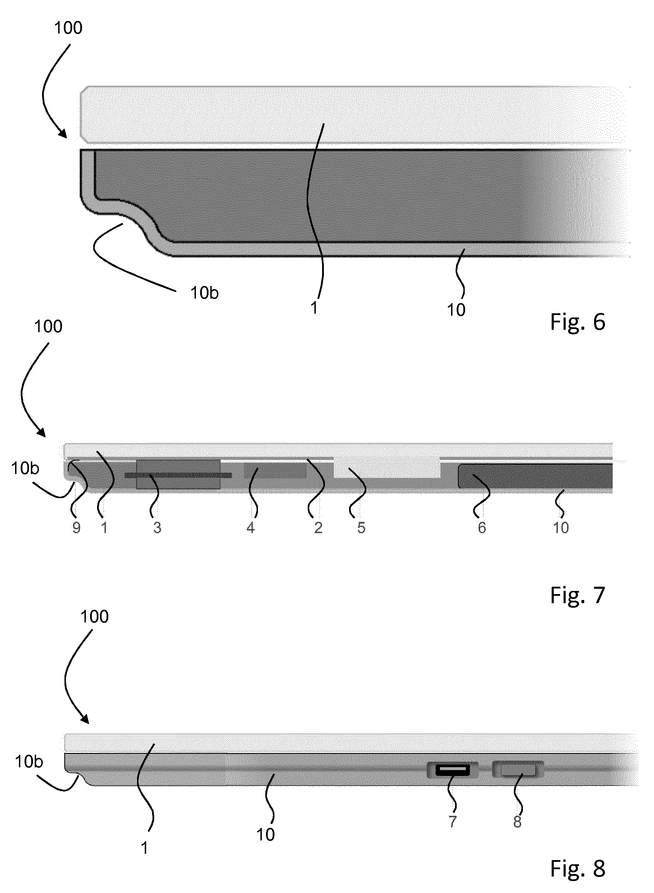

In Fig. 1 ist eine erfindungsgemäße Multifunktionsvorrichtung 100 in perspektivischer Gesamtansicht gezeigt. Die Multifunktionsvorrichtung 100 ist nach Art eines flachen, ebenen Bretts ausgebildet und besitzt rechteckige Abmessungen sowie abgerundete Ecken 101. Die Multifunktionsvorrichtung (oder kurz: "Vorrichtung") 100 umfasst ein unterseitiges, wannenartiges Gehäuse 10, vorzugsweise aus einem Metall oder Kunststoff, und eine oberseitige, insgesamt transluzide Abdeckplatte 1, die aus einem schneidfesten Glasmaterial gebildet sein kann. Bei Bezugszeichen 102 ist ein (Firmen-)Logo vorgesehen, welches in die Abdeckplatte 1 eingraviert oder auf deren Ober- bzw. Unterseite aufgedruckt sein kann. Bei Bezugszeichen 103 ist eine Ausnehmung in einer kurzen Seite der Vorrichtung 100 dargestellt, um diese bei bestimmungsgemäßer Verwendung gemäß Fig. 2 einfach handhaben zu können. Bezugszeichen 4, 4' bezeichnen jeweils ein Bedienelement, nämlich zum Aktivieren/Deaktivieren eines Leuchtmodus bzw. Wägemodus, worauf weiter unten noch eingegangen wird. Der jeweilige Ort der Bedienelemente 4, 4' kann durch einen entsprechenden Aufdruck oder eine Gravur an der Abdeckplatte 1 gekennzeichnet sein, wie eingezeichnet. Bei Bezugszeichen 5 ist eine Anzeige bzw. eine zugehörige Anzeigeeinrichtung dargestellt, wobei letztere unterhalb der transluziden Abdeckplatte 1 angeordnet ist, sodass die eigentliche Anzeige - im aktiven Zustand - durch die Abdeckplatte 1 hindurch sichtbar ist. Die Anzeige ist vorliegend - ohne Beschränkung - als Sieben-Segmente-Anzeige ausgeführt. Bei Bezugszeichen 7, 8 weist die Vorrichtung 100 einen Steckeranschluss bzw. ein Schaltelement auf, worauf weiter unten noch genauer eingegangen wird. Steckeranschluss 7 und Schaltelement 8 müssen nicht an einer gemeinsamen Position bezogen auf die restlichen Vorrichtung 100 angeordnet sein. Das Gehäuse 10 kann - wie hier dargestellt - in Länge und Breite ein Übermaß gegenüber der Abdeckplatte 1 aufweisen, ohne dass die Erfindung hierauf beschränkt wäre (vgl. Fig. 6 ff). Auch ein bündiger Abschluss ist möglich, oder die Abdeckplatte 1 kann das Gehäuse 10 sogar überragen.

In Fig. 2 ist eine bestimmungsgemäße Verwendung der Vorrichtung 100 anschaulich dargestellt: Eine im Wesentlichen herkömmliche Küchenspüle 200 weist ein Spülenbecken 201 mit einem umlaufenden Beckenrand 202 um, an den eine im Wesentliche ebene Spülenfläche 203 angrenzt. Die Vorrichtung weist solche Abmessungen ihrer längeren Seiten auf, dass sie das Spülenbecken 201 gerade überbrückt - wie dargestellt - und dabei mit dem Rand des Gehäuses 10 im Bereich der kürzeren Seiten am Beckenrand 202 aufliegt. Dabei definieren vorzugsweise eine Oberfläche 1a der Abdeckplatte 1 und die Spülenfläche 203 eine gemeinsame Ebene. Mittels der Ausnehmung 103 kann die Vorrichtung 100 leicht in die gezeigte Lage gebracht bzw. aus dieser entfernt werden. Die Oberfläche 1a der Abdeckplatte 1 bzw. die gesamte Abdeckplatte 1 ist vorzugsweise schneidfest ausgebildet, sodass die Vorrichtung - insbesondere in der gezeigten Stellung - als Schneidebrett verwendbar ist.

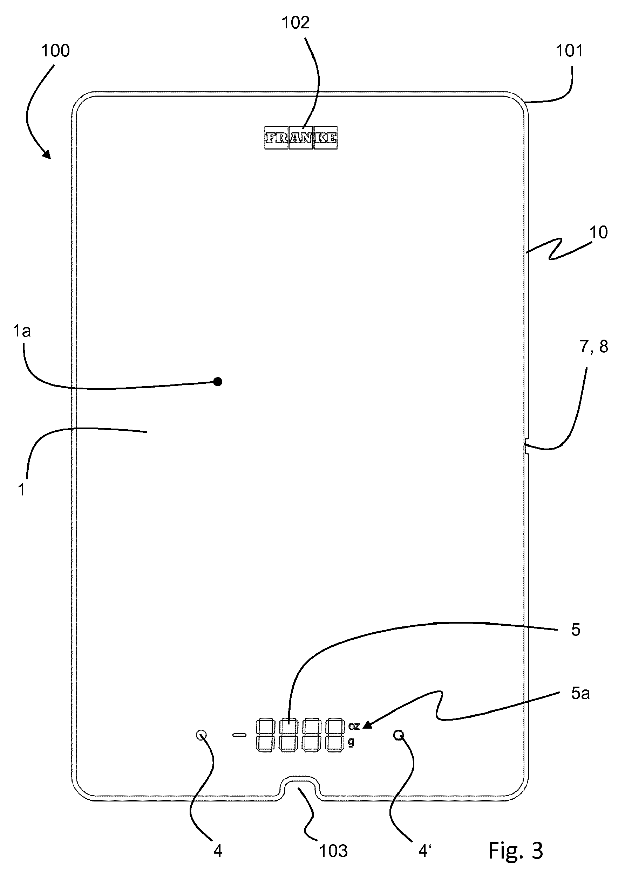

In Fig. 3 ist die Vorrichtung 100 in einer Draufsicht dargestellt. Auf die wesentlichen Elemente der Vorrichtung 100 wurde bereits hingewiesen. Gut erkennbar ist die Ausnehmung 103 zur einfachen Entnahme der Vorrichtung 100 aus einem Spülenbecken (vgl. Fig. 2). Das Bedienelement 4 ist als kapazitiver Näherungsschalter oder dgl. ausgebildet, der auf die Annäherung eines menschlichen Fingers reagiert. Es dient zum Ein-/Ausschalten eines Leuchtmodus, in dem die Vorrichtung 100 als Beleuchtungsvorrichtung fungiert, bzw. zum Auswählen einer bestimmten Lichtstärke oder Lichtfarbe, zu welchem Zweck die Vorrichtung wenigstens eine Lichtquelle aufweist, worauf weiter unten genauer einzugehen ist, beispielsweise durch mehrmaliges sequentielles Antippen. Auch das weitere Bedienelement 4' ist als kapazitiver Näherungsschalter oder dgl. ausgebildet, der auf die Annäherung eines menschlichen Fingers reagiert. Es dient, beispielsweise durch mehrmaliges sequentielles Antippen, zum Ein-/Ausschalten eines Wägemodus, in dem die Vorrichtung 100 als Waage fungiert, bzw. zum Auswählen einer Tara-Funktion, um die Anzeige 5 vor dem eigentlichen Wägevorgang auf Null zu stellen. Neben der Anzeige 5 für das Wägeergebnis findet sich bei Bezugszeichen 5a eine weitere Anzeige für eine ausgewählte Wägeeinheit (Gramm (g) bzw. Unzen (oz)). Die Auswahl der Wägeeinheit kann über das bereits erwähnte Schaltelement 8 erfolgen, welches speziell als Taster ausgebildet sein kann. Leuchtmodus und Wägemodus können unabhängig voneinander aktiviert und deaktiviert werden. Vorzugsweise erfolgt nach einer gewissen Zeit eine automatische Abschaltung.

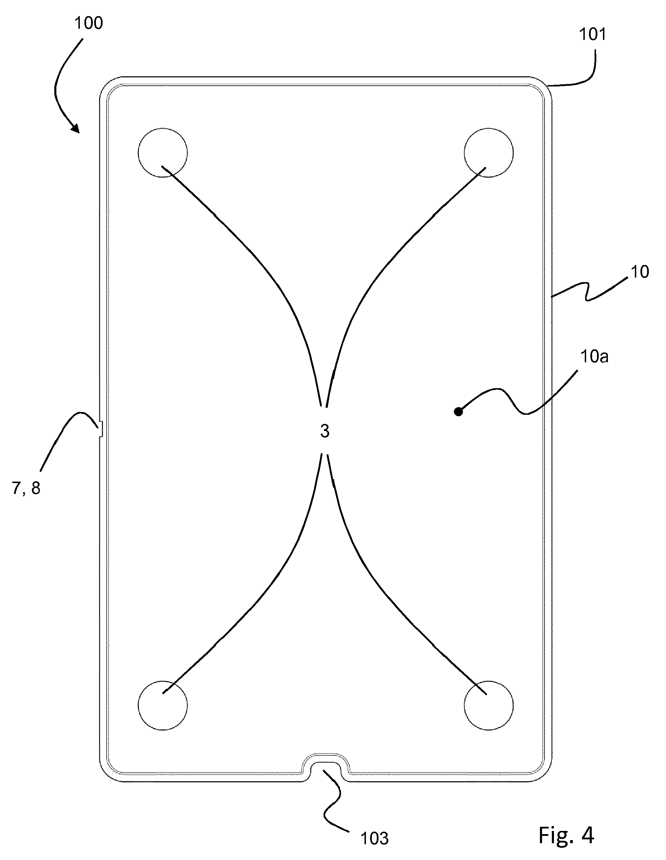

In Fig. 4 ist eine rückwärtige Ansicht der Vorrichtung 100 gezeigt. Das Gehäuse 10 weist demnach an seiner Rückseite 10a im Bereich jeder seiner vier Ecken einen - ohne Beschränkung - piezoelektrischen Gewichtssensor 3 auf, der zugleich als Standfuß dient und vorzugsweise zumindest aufstellseitig mit einem relativ weichen, rutschhemmenden Material versehen ist, damit die Vorrichtung 100, anders als in Fig. 2 dargestellt, auch auf einer ebenen Flächen, beispielsweise einer Küchenarbeitsplatte, sicher verwendet werden kann.

Der innere Aufbau der Vorrichtung 100 wird nun anhand der folgenden Figuren genauer beschrieben.

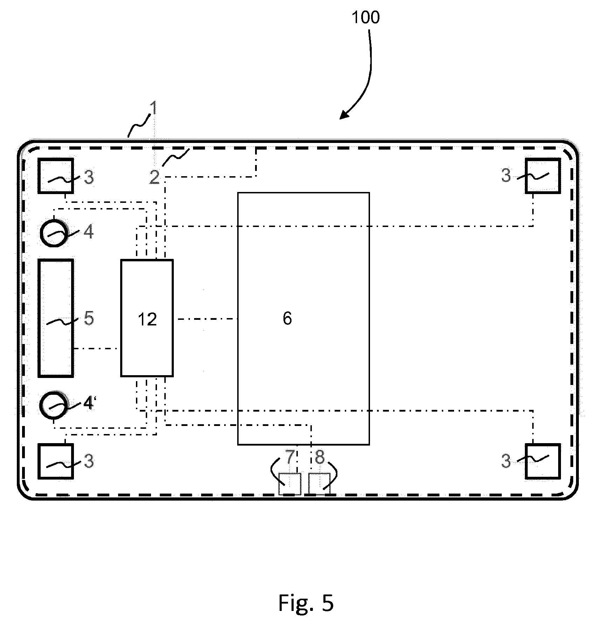

In Fig. 5 ist ein fiktiver Blick durch die Abdeckplatte 1 auf die darunter befindlichen weiteren Elemente bei einer Ausgestaltung der Vorrichtung 100 dargestellt, welche Elemente normalerweise als solche nicht erkennbar sind - beispielsweise, indem die Abdeckplatte 1 nicht klar durchsichtig sondern trüb nach Art eines Milchglases ausgebildet ist. Das Gehäuse der Vorrichtung 100 ist in dieser Figur nicht gezeigt. Bezugszeichen 2 bezeichnet eine flächige Lichtquelle, die im Leuchtmodus mittels des Bedienelements 4 aktiviert (an/aus) bzw. umgeschaltet (Lichtstärke, Beleuchtungsart, Farbe,...) wird. Auf mögliche konstruktive Ausgestaltungen der Lichtquelle 2 wird weiter unten eingegangen. Bezugszeichen 3 bezeichnet jeweils einen Gewichtssensor, der als piezoelektrischer Sensor ausgebildet sein kann. Jeweils ein - ohne Beschränkung - piezoelektrischer Gewichtssensor 3 ist in jeder Ecke der Vorrichtung 100 angeordnet. Im Hinblick auf die in Fig. 4 gezeigte Variante steht jeder der Gewichtssensoren 3 nach unten aus dem Gehäuse (hier nicht gezeigt) heraus. Eine alternative Ausgestaltung wird weiter unten anhand von Fig. 7 näher erläutert. Über die Gewichtssensoren 3 kann die Abdeckplatte 1 (bei der alternativen Ausgestaltung) mechanisch mit dem Gehäuse (hier nicht gezeigt) gekoppelt und relativ zu diesem in einer Richtung senkrecht zur Ebene der Abdeckplatte 1 beweglich gelagert sein. Im Hinblick auf die in Fig. 4 gezeigte Variante sind Abdeckplatte 1 und Gehäuse fest verbunden. Die Lichtquelle 2, die Gewichtssensoren 3, die Bedienelemente 4, 4', die Anzeigeeinrichtung 5 sowie das Schaltelement 8 stehen mit einer zentralen Steuer- und Auswerteeinheit 12 in signaltechnischer Wirkverbindung, was durch entsprechende strichpunktierte Linien symbolisiert wird. Die Steuer- und Auswerteeinheit 12 wertet die jeweils empfangenen Signale aus und steuert die entsprechenden Elemente geeignet an - beispielsweise die Anzeigeeinrichtung 5 zum Anzeige eines Wägeergebnisses nach Maßgabe der Gewichtssensoren 3 in der per Schaltelement 8 ausgewählten Gewichtseinheit (g/oz) oder die Lichtquelle 2 zur Aktivierung eines gewählten Leuchtmodus (z.B. gedämpftes Hintergrundlicht). Bezugszeichen 6 bezeichnet einen zentral angeordneten Akkumulator, der als Energiequelle für alle elektrischen Verbraucher der Vorrichtung 100 dient, insbesondere die Lichtquelle 2, die Gewichtssensoren 3 und die Steuereinheit 12, was nicht explizit eingezeichnet ist. Der Akkumulator wird über den Steckeranschluss 7, vorzugsweise aber ohne Beschränkung ein Micro-USB-Anschluss, bei Bedarf wieder aufgeladen.

In Fig. 6 ist eine erste Schnittansicht einer Ausgestaltung der Vorrichtung 100 im Randbereich von Abdeckplatte 1 und Gehäuse 10 gezeigt, wobei bei der gezeigten Ausgestaltung Abdeckplatte 1 und Gehäuse 10 - anders als in Fig. 1-4 - im Wesentlichen bündig abschließen. Das Gehäuse 10 weist im unteren Randbereich bei Bezugszeichen 10b eine vorzugsweise umlaufend ausgebildete, konkave Ausnehmung bzw. eine vorzugsweise umlaufende, konkave Schulter auf, die insbesondere abgerundet ausgebildet ist und die speziell dazu dient, die Vorrichtung 100, wie in Fig. 2 beispielhaft gezeigt, an einer Spüle anzuordnen. Vorzugsweise ist die Ausnehmung 10b in Form und Größe an eine entsprechend komplementäre Struktur der Spüle (z.B. einen Beckenrand bzw. ein Beckenrandprofil) angepasst.

In Fig. 7 ist eine weitere Schnittansicht einer Ausgestaltung der Vorrichtung 100 dargestellt, beispielsweise mit Blickrichtung von links gemäß Fig. 5, wobei allerdings aus Gründen der Übersichtlichkeit der Akkumulator 6 gegenüber Fig. 5 seitlich verschoben gezeichnet ist. Gut erkennbar ist, wie der dargestellte Gewichtssensor 3 bei dieser Variante der Vorrichtung 100 eine Verbindung zwischen Gehäuse 10 und Abdeckplatte 1 realisiert, welche beweglich zueinander gelagert sind. Somit kann eine Wägefunktion auch in der in Fig. 2 gezeigten Stellung ausgeführt werden. Das Bedienelement 4 ist nahe der Abdeckplatte 1 angeordnet, um bei Annäherung z.B. eines Fingers kapazitiv beeinflussbar zu sein. Das gilt selbstverständlich auch für das hier nicht gezeigte weitere Bedienelement 4'. Die Anzeigeeinrichtung 5 und die Lichtquelle 2 sitzen unmittelbar unterhalb der Abdeckplatte 1, damit die Lichtwirkung und der Anzeigeeffekt optimal zur Geltung kommen können. Zwischen einem oberen Rand des Gehäuses 10 und der Unterseite der Abdeckplatte 1 befindet sich eine umlaufende Dichtung 9 (Dichtmembran), um die Elemente innerhalb des Gehäuses 10 vor Wasser- und/oder Schmutzeinwirkung von außen zu schützen. Wie bereits erwähnt, kann der Gewichtssensor 3 alternativ auch nach unten aus dem Gehäuse 10 herausragen oder sogar vollständig außerhalb bzw. unterhalb des Gehäuses 10 angeordnet sein. Gehäuse 10 und Abdeckplatte 1 können dann fest verbunden sein, was eine besonders kostengünstige und robuste Ausgestaltung ergibt. Auf das Vorsehen der Dichtung 9 (Dichtmembran) kann dabei unter Umständen verzichtet werden.

In Fig. 8 ist eine seitliche Ansicht einer Ausgestaltung der Vorrichtung 100 im Bereich einer der längeren Seiten gezeigt. Gut erkennbar sind dabei der Steckeranschluss 7 (hier - ohne Beschränkung - ein Standard-USB-Anschluss oder dgl.) und das Schaltelement (Taster) 8. Zum Verschließen insbesondere des Steckanschlusses 7 bei bestimmungsgemäßer Verwendung der Vorrichtung 100 kann ein entsprechend geformtes Verschlusselement (Stopfen) vorgesehen sein (nicht gezeigt).

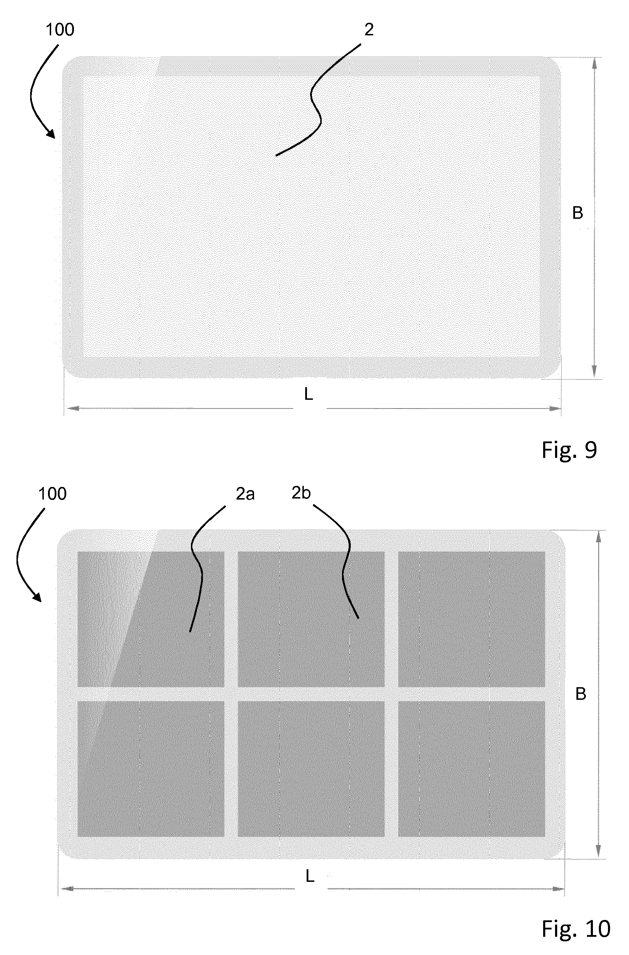

In Fig. 9 ist bei einer Ausgestaltung der Vorrichtung 100 eine mögliche Realisierung der Lichtquelle 2 als flächige Lichtleiteinrichtung gezeigt, die mit grundsätzlich einem einzigen Lichterzeuger, beispielsweise einer Leuchtdiode (nicht gezeigt), lichttechnisch zusammenwirken kann, um einen flächigen Leuchteffekt zu erzielen, wie dies beispielsweise von eBook-Lesegeräten bekannt ist. Es können auch mehrere Lichterzeuger Verwendung finden, um beispielsweise unterschiedliche Farben zu erzeugen. Fig. 9 bezeichnet exemplarisch die kurze Seite der Vorrichtung 100 mit dem Bezugszeichen B und die lange Seite mit dem Bezugszeichen L, was grundsätzlich für alle gezeigten Ausführungsformen gelten kann.

In Fig. 10 ist bei einer anderen Ausgestaltung der Vorrichtung 100 eine weitere mögliche Realisierung der Lichtquelle 2 als Rasteranordnung aus mehreren flächigen Lichterzeugern 2a, 2b,... gezeigt, die beispielsweise als OLED-Elemente ausgeführt und in der dargestellten Weise angeordnet sein können, um ebenfalls einen flächigen Leuchteffekt zu erzielen. Es können auch mehrere unterschiedliche Lichterzeuger 2a, 2b,...Verwendung finden, um beispielsweise unterschiedliche Farben zu erzeugen. Fig. 10 bezeichnet wiederum exemplarisch die kurze Seite der Vorrichtung 100 mit dem Bezugszeichen B und die lange Seite mit dem Bezugszeichen L, was grundsätzlich für alle gezeigten Ausführungsformen gelten kann.

Bei bestimmungsgemäßer Verwendung an einer Küchenspüle schafft die Vorrichtung 100 einen neuartigen Küchenarbeitsplatz, der praktische (schneiden und wiegen) und ästhetische Funktionen (Beleuchtung) in eleganter und ansprechender Weise vereint.

## Patentansprüche

1. Multifunktionsvorrichtung (100) zur Verwendung in der Küche, umfassend:
- ein unterseitiges Gehäuse (10);
- eine oberseitige Abdeckplatte (1), die zumindest teilweise transluzid ausgebildet ist;
- wenigstens eine innerhalb des Gehäuses (10) im Bereich der Abdeckplatte (1) angeordnete Lichtquelle (2; 2a, 2b);
- wenigstens einen zwischen Gehäuse (10) und Abdeckplatte (1) oder an einer Unterseite (10a) des Gehäuses (10) angeordneten Gewichtssensor (3);
- wenigstens ein Bedienelement (4, 4') zum selektiven Aktivieren eines Leuchtmodus mit eingeschalteter Lichtquelle (2) und/oder eines Wägemodus mit eingeschaltetem Gewichtssensor (3).

2. Multifunktionsvorrichtung (100) nach Anspruch 1, bei der im Leuchtmodus verschiedene Lichtstärken und/oder Lichtfarben schaltbar oder auswählbar sind, vorzugsweise gemäß einem oder mehreren der folgenden Modi: Beleuchtungsmodus, Hintergrundlichtmodus, Umgebungslichtmodus, Stimmungslichtmodus.

3. Multifunktionsvorrichtung (100) nach Anspruch 1, bei der die Abdeckplatte (1) als Schneidebrett ausgebildet ist.

4. Multifunktionsvorrichtung (100) nach Anspruch 1, bei der die Abdeckplatte (1) in einem Glas- oder Glaskeramikmaterial ausgebildet ist, welches vorzugsweise rückseitig zumindest bereichsweise (102) bedruckt und/oder beschichtet ist.

5. Multifunktionsvorrichtung (100) nach Anspruch 1, umfassend eine wieder aufladbare Energiequelle (6), insbesondere in Form eines Akkumulators, die vorzugsweise mittels eines Micro-USB-Anschlusses (7) aufladbar und höchst vorzugsweise zentral bezüglich der Multifunktionsvorrichtung (100) angeordnet ist.

6. Multifunktionsvorrichtung (100) nach Anspruch 1, **dadurch gekennzeichnet, dass** die gesamte Multifunktionsvorrichtung (100) wasserfest, insbesondere spritzwassergeschützt, und gegenüber äußerer Schmutzeinwirkung unempfindlich ausgebildet ist (9).

7. Multifunktionsvorrichtung (100) nach Anspruch 1, bei der das Gehäuse ein umlaufendes Randprofil (10b) aufweist, welches zumindest teilweise komplementär zu einem Beckenrandprofil einer vorzugsweise handelsüblichen Küchenspüle (200) ausgebildet ist und höchst vorzugsweise eine umlaufende, konkave Schulter aufweist, die insbesondere abgerundet ausgebildet ist.

8. Multifunktionsvorrichtung (100) nach Anspruch 1, bei der das Gehäuse (1) in Metall oder Kunststoff ausgebildet ist.

9. Multifunktionsvorrichtung (100) nach Anspruch 1, bei der das Gehäuse (1) wannenartig und zur Abdeckplatte (1) hin offen ausgebildet oder mittels der Abdeckplatte (1) nach außen im Wesentlichen abgeschlossen ist.

10. Multifunktionsvorrichtung (100) nach Anspruch 1, bei der die Abdeckplatte (1) senkrecht zur Plattenebene relativ zum Gehäuse (10) beweglich gelagert ist, vorzugsweise mittels des wenigstens einen Gewichtssensors (3), oder bei der die Abdeckplatte (1) im Wesentlichen fest mit dem Gehäuse (10) verbunden ist.

11. Multifunktionsvorrichtung (100) nach Anspruch 1, bei der unterhalb der Abdeckplatte (1) wenigstens eine der folgenden Komponenten zumindest teilweise in dem Gehäuse (10) angeordnet ist:
- der Gewichtssensor (3), vorzugsweise ein piezoelektrischer Sensor, höchst vorzugsweise eine Mehrzahl derartiger Gewichtssensoren (3);
- die Lichtquelle (2; 2a, 2b);
- wenigstens ein An-/Ausschalter (4), vorzugsweise jeweils wenigstens einer für den Leuchtmodus und für den Wägemodus, vorzugsweise in Form eines kapazitiven Schalters;
- die Energiequelle (6) gemäß Anspruch 5;
- wenigstens ein Steckeranschluss (7), vorzugsweise zum Laden der Energiequelle (6), vorzugsweise in Form eines Micro-USB-Anschlusses;
- wenigstens ein Schaltelement (8), vorzugsweise zum Umschalten oder Auswählen einer Wägeeinheit;
- eine Anzeigeeinrichtung (5, 5a) zum Anzeigen eines Wägeergebnisses.

12. Multifunktionsvorrichtung (100) nach Anspruch 1, bei der das Gehäuse (10) und die Abdeckplatte (1) über den wenigstens einen Gewichtssensor (3) mechanisch gekoppelt sind.

13. Multifunktionsvorrichtung (100) nach Anspruch 1, bei der eine vorzugsweise durchgängig umlaufende Dichtung (9) zwischen Gehäuse (10) und Abdeckplatte (1) vorgesehen ist.

14. Multifunktionsvorrichtung (100) nach Anspruch 1, bei der die Anzeigeeinrichtung (5) gemäß Anspruch 11 und/oder die Lichtquelle (2; 2a, 2b) unterseitig an der Abdeckplatte (1) festgelegt oder dicht benachbart zu dieser angeordnet ist.

15. Multifunktionsvorrichtung (100) nach Anspruch 1, bei der die Lichtquelle (2) mit einer Lichtleiteinrichtung zusammenwirkt, um einen flächigen Leuchteffekt zu erzielen, oder bei der die Lichtquelle (2a, 2b) wenigstens ein OLEDElement oder dergleichen umfasst.

16. Multifunktionsvorrichtung (100) nach Anspruch 1, bei Rückbezug auf Anspruch 11, bei der die Anzeigeeinrichtung (5) bei nicht aktivem Wägemodus von außerhalb der Abdeckplatte (1) im Wesentlichen unsichtbar und nur bei aktivem Wägemodus von außerhalb der Abdeckplatte (1) sichtbar ist, wobei vorzugsweise die Anzeigeeinrichtung (5) als 7-Segmente-Anzeige ausgebildet ist.

17. Multifunktionsvorrichtung (100) nach Anspruch 1, bei Rückbezug auf Anspruch 11, bei der der Steckeranschluss (7) als Standard- oder Micro-USBAnschluss ausgebildet ist, welcher vorzugsweise an einer längeren Gehäuseseite angeordnet ist, und welcher höchst vorzugsweise bei Verwendung der Multifunktionsvorrichtung (100) mittels einer Abdeckung gegen Schmutz und/oder Spritzwasser geschützt ist.

18. Küchenarbeitsplatz, umfassend eine Küchenspüle (200) mit wenigstens einem Spülenbecken (201), das einen umlaufenden Beckenrand (202) aufweist, und eine Multifunktionsvorrichtung (100) nach einem der Ansprüche 1 bis 17, wobei der Beckenrand (202) und das Gehäuse (10) der Multifunktionsvorrichtung (100) zumindest bereichsweise komplementär und mit aufeinander abgestimmten Abmessungen ausgebildet sind, so dass die Multifunktionsvorrichtung (100) im Randbereich in das Spülenbecken (201) einhängbar ist, wobei vorzugsweise eine Oberseite (1a) der Abdeckplatte und ein Spülenrand oder eine Spülenfläche (203) in einer gemeinsamen Ebene liegen oder eine solche definieren.
